# EUROPEAN PATENT SPECIFICATION

(11) **EP 2 276 627 B1**
(45) Date of publication and mention of the grant of the patent: **06.04.2016**
(21) Application number: 08763816.9
(22) Date of filing: 18.04.2008
(51) Int. Cl.: B29D 30/24, B29D 30/20

(54) **PROCESS AND APPARATUS FOR BUILDING TYRES**
VERFAHREN UND VORRICHTUNG ZUR REIFENHERSTELLUNG
PROCÉDÉ ET APPAREIL POUR CONFECTIONNER DES PNEUS

(43) Date of publication of application: 26.01.2011
(73) Proprietor: Pirelli Tyre S.p.A., 20126 Milano (IT)
(72) Inventor: MARCHINI, Maurizio, I-20126 Milano (MI) (IT); AMURRI, Cesare Emanuele, I-20126 Milano (MI) (IT); MANCINI, Gianni, I-20126 Milano (MI) (IT)
(74) Representative: Tansini, Elio Fabrizio
(86) International application number: PCT/IT2008/000263
(87) International publication number: WO 2009/128103

(56) References cited:
- EP-A- 0 780 220
- EP-A- 1 847 380
- WO-A-2005/097478
- US-A- 2 045 545
- US-A- 3 510 375

## Description

The present invention relates to a process and an apparatus for building tyres.

More particularly, the invention applies to the process and equipment used for building a green tyre to be subsequently submitted to a vulcanisation cycle so as to obtain the finished product.

A tyre for vehicles wheels generally comprises a carcass structure including at least one carcass ply having respectively opposite end flaps in engagement with respective annular anchoring structures, integrated into the regions usually identified as "beads" and having an inner diameter substantially corresponding to a so-called "fitting diameter" of the tyre on a respective rim.

Associated with the carcass structure is a belt structure comprising one or more belt layers, arranged in radially superposed relationship relative to each other and to the carcass ply, provided with textile or metallic reinforcing cords having a crossed orientation and/or disposed substantially parallel to the circumferential extension direction of the tyre. At a radially external position to the belt structure, a tread band is applied which is also of elastomeric material like other constituent semifinished products of the tyre.

Respective sidewalls of elastomeric material are further applied, at an axially external position, to the side surfaces of the carcass structure, each extending from one of the side edges of the tread band until close to the respective annular anchoring structure to the beads. In tyres of the "tubeless" type, an airtight coating layer usually referred to as "liner" covers the inner surfaces of the tyre.

Subsequently to building of the green tyre obtained through assembly of the respective components, a vulcanisation and moulding treatment is generally carried out which aims at determining structural stabilisation of the tyre through cross-linking of the elastomeric compounds as well as at impressing it with a desired pattern and with possible graphic distinctive marks at the sidewalls.

The carcass structure and belt structure are generally made separately from each other at respective work stations, to be mutually assembled at a second time.

More particularly, manufacture of the carcass structure first contemplates application of the carcass ply or plies onto a building drum, to form a so-called substantially cylindrical "carcass sleeve". The annular anchoring structures to the beads are fitted or formed on opposite end flaps of the carcass ply or plies that are subsequently turned up around the annular structures so as to enclose them in a sort of loop.

Simultaneously, a so-called "outer sleeve" is made on a second or auxiliary drum, said outer sleeve comprising the belt layers applied in radially superposed relationship with each other, and possibly the tread band applied to the belt structure at a radially external position. The outer sleeve is then picked up from the auxiliary drum to be coupled to the carcass sleeve. To this aim, the outer sleeve is disposed coaxially around the carcass sleeve and then the carcass ply or plies are shaped into a toroidal configuration, for example by mutual axial approaching of the beads and simultaneous admission of fluid under pressure into the carcass sleeve, so as to cause radial expansion of the carcass plies until adhesion of the latter against the inner surface of the outer sleeve is determined.

Assembly of the carcass sleeve to the outer sleeve can be carried out on the same drum as used for making the carcass sleeve, in which case reference is made to a "unistage building process" or "unistage process".

Also known are building processes of the so-called "two-stage" type, in which a so-called "first-stage drum" is used for making the carcass sleeve, while assembly between carcass structure and outer sleeve is carried out on a so-called "second-stage sleeve" or "shaping sleeve" onto which the carcass sleeve picked up from the first-stage drum and subsequently the outer sleeve picked up from the auxiliary drum are transferred.

EP0822059 discloses a process and an apparatus for manufacturing a tyre in which the sidewalls cover the ends of the tread band. The process comprises the steps of inserting an anti-sticking elastic tubular element around the carcass plies at each end of a building drum, winding up the sidewalls on these elements, applying a further tubular element on the sidewalls and turning the tubular elements over so as move the sidewalls apart to an open position beside the building drum. The carcass can be transferred onto a (second-stage) shaping drum to be shaped into a toroidal conformation against the belt pack-tread band assembly prepared separately. Subsequently, the band ends are knocked down on the toric carcass and the sidewalls are turned up against the carcass over the ends of the tread band.

Document WO2004/037523 discloses a method and an apparatus for manufacturing a tyre for vehicle wheels, which method comprises the steps of feeding a semifinished product onto a drum, setting a separator element at a radially external position to the semifinished product, feeding the carcass ply onto the drum at a radially external position to the separator element, disposing the annular elements at a radially external position to the carcass ply, turning up the carcass ply around the annular elements, removing the separator element, applying the bead cores, applying a belt structure at a radially external position to the carcass structure, applying a tread band at a radially external position to the belt structure, shaping the tyre into a toric conformation.

Document WO 2005/097478 discloses a method for producing a pneumatic tire. The method comprises the following steps: feeding tire components to a tire building drum having support segments, intermediate segments and a base in a first feed sequence; setting the bead cores using a bead setting device; inducing the intermediate segments to collapse by reducing the diameter; bringing together the support segments in the axial direction of the tire building drum and expanding the base in the radial direction of the tire building drum; feeding additional tire components in a second feed sequence; returning the base and the support segments to an initial position of the tire building drum; and removing the green tire from the tire building drum.

In the technological context in which the Applicant has to operate, an increase in the daily productivity for tyres different from each other in size and structure is often required, while maintaining a high operating flexibility of the production itself.

More specifically, by operating flexibility, in this context it is intended the possibility of using elementary components different from each other in terms of type of elastomeric material or type of textile or metallic reinforcing cord.

In the present specification and in the following claims, by "elementary components" it is intended to denote continuous elongated elements of elastomeric material, textile and/or metallic rubberised cords, strip-like elements. Note that, to the aims of the present specification and the subsequent claims, "strip-like element" means a strip of elastomeric material cut to size and comprising one or more textile or metallic reinforcing cords parallel to each other or crossed.

In this context the Applicant has also verified that an excellent quality of the product can be achieved by carrying out the whole manufacture of the green tyre without removing the carcass structure from the building drum.

More specifically, the Applicant has verified that the above can be obtained by transferring the carcass structure to different work stations, until building of same is completed on its own building drum with the aid of support members designed to bear the axially external ends of at least one carcass ply, or.of other components of the carcass structure itself, and subsequently moving the support members away and then giving the carcass ply the suitable conformation by the action of at least one shaping member external to said building drum, without therefore disengaging the built carcass structure from the building drum.

The Applicant has however noticed that during building of the carcass structure, a "belting" force, due to laying of one or more continuous elongated elements of elastomeric material by spiralling, is generated on said support members, which continuous elements are for example designed to form the liner, underliner, abrasion-proof elongated element or other tyre components of elastomeric material. It is the Applicant's opinion that this phenomenon takes place because during laying of the continuous elongated element on the respective support member, this continuous elongated element is pulled and deformed in an elastic manner along its longitudinal extension and laid in this deformed configuration on the support member which inhibits it from recovering its original configuration. The length of the continuous elongated element along the peripheral extension of the support member is therefore greater than the length of the continuous elongated element itself in its original configuration. The tyre components thus formed radially clamp the support member, exerting said "belting" force thereon.

This force makes it difficult to carry out said operation of moving the support members away so as to go on with building of the carcass structure comprising at least turning up of at least one carcass ply built on the building drum, this difficulty may even bring about tearing of the materials laid on the building drum so that the tyre being processed is to be inevitably discarded.

The Applicant has also noticed that while application of an anti-sticking surface on said support members could solve the above mentioned problem, it would make laying of components such as the so-called "square-woven fabric" very complicated in an automated environment like that of the technological context in question. These components, made by means of a semifinished product to size comprising a plurality of crossed cords buried in a layer of elastomeric material, do not show particular adhesiveness and are fully laid axially at the outside of the building drum, i.e., completely on said support members. These components could not therefore, without manual intervention, remain in place during their application on said anti-sticking surface.

The Applicant has then realised that, through availability on said support members of different laying surfaces axially movable between each other, it would have been possible to build any tyre component thereon, thus avoiding both the effect due to the belting force and the problems connected with the reduced adhesiveness of some elements.

In more detail, the Applicant has found that by radially contracting the circumferential support surface of a separation element operatively associated with each auxiliary support member it is possible to easily uncouple said circumferential support surface from any tyre component built thereon, irrespective of the structure of same, without damaging this component or other portions of the tyre being processed.

More specifically, according to a first aspect, the present invention relates to a process for building tyres as defined in claim 1, the process comprising the steps of :
- providing a building drum having a first outer circumferential surface;
- engaging auxiliary support members with the building drum, each in axially approached relationship with an axial end of the building drum, each auxiliary support member having a second outer circumferential surface extending in the continuation of said first outer circumferential surface;
- providing at least one separation element at a radially external position on at least one of said auxiliary support members, said separation element having a circumferential support surface;
- applying at least one tyre component around at least said second outer circumferential surface, which tyre component lies at least partly on said circumferential support surface;
- axially moving said auxiliary support members away from said building drum so as to radially contract the circumferential support surface of each separation element to decouple it from said respective at least one tyre component.

Therefore, the process according to the invention enables the auxiliary support members to be drawn out of the tubular ends of the carcass sleeve already partly formed on the building drum, without this drawing action being counteracted by friction between the circumferential support surface and the radially internal portions of said tubular ends lying in contact with said circumferential support surface, and generating forces of such a nature that the carcass sleeve being formed becomes damaged.

In accordance with a further aspect, the invention relates to an apparatus for building tyres as defined in claim 17, the apparatus comprising:
- a building drum having at least one first outer circumferential surface;
- at least one pair of auxiliary support members each comprising a main body, said auxiliary support members being susceptible of removable engagement with the building drum, each in axially approached relationship with a respective end of the building drum, and having second outer circumferential surfaces extending in the continuation of said first outer circumferential surface to bear at least one tyre component;
- at least one separation element provided at a radially external position on at least one of said auxiliary support members, carrying a circumferential support surface; each separation element being movable relative to the main body of the corresponding auxiliary support member between a first support position at which the main body supports said separation element along radial directions, and a second release position at which said separation element is free to move along said radial directions. Preferred embodiments of the invention are defined in the dependent claims.

The present invention in at least one of said aspects can have one or more of the preferred features hereinafter described.

Preferably, radial contraction of the circumferential support surface consists in collapsing of a membrane included in said separation element.

Alternatively, radial contraction of the circumferential support surface consists in bending of a laminar body included in said separation element.

Collapsing of the membrane or bending of the laminar body cause loss of contact between the circumferential support surface and the radially internal portions of the tubular ends so that the friction forces generated therebetween will fail.

Preferably, each auxiliary support member comprises a main body, said separation element being movable relative to said main body between a first support position, at which the main body bears said separation element along radial directions, and a second release position, at which said separation element is free to move along said radial directions.

More preferably, the step of radially contracting the circumferential support surface is carried out by shifting the main body relative to the separation element from the first to the second positions.

This structure allows each of the circumferential support surfaces to be drawn out of the respective tubular end of the partly formed carcass sleeve only when the friction force has gone down under a limit value capable of not causing damages to said carcass sleeve.

Preferably, for movement between the first support position and the second release position, the main body is axially shifted relative to said separation element.

Preferably, the circumferential support surface is axially moved apart after the step of radially contracting said circumferential support surface.

Preferably, the process further comprises the steps of:
- axially moving each main body away from the building drum from the first to the second positions, while said circumferential support surface is still in contact with said at least one tyre component until causing radial contraction of said circumferential support surface and separation of said circumferential support surface from the respective tyre component;
- axially moving the main body and the separation element away from the building drum.

Extraction of the circumferential support surfaces starts therefore automatically as soon as the friction force has gone down under said limit value.

In accordance with a preferred embodiment of the process, the step of applying said at least one tyre component around said second outer circumferential surface comprises the step of laying a continuous elongated elastomeric element into coils disposed in side by side or radially superposed relationship. This laying allows the so-called "abrasion-proof elongated element" to be made, i.e. a reinforcing insert placed at the tyre bead in the region where the bead comes into contact with the rim on which the tyre itself is mounted.

By this type of laying it is also possible to make the liner, under-liner or further reinforcing elements.

In addition, advantageously, radial contraction of the circumferential support surface is caused by said belting of said at least one tyre component on said circumferential support surface.

According to the Applicant's interpretation, when the separation element is no longer supported by the main body and is free to radially move, the continuous elongated element forming said component will tend to go back to its original configuration, radially closing towards the rotation axis of the building drum and causing radial contraction also of the circumferential support surface. Following this double radial contraction, the continuous contact between the circumferential support surface and said component being part of the radially internal portion of the respective tubular end of the partly formed carcass sleeve is no longer present.

After the radial-contraction step, said separation element is brought back to the first support position relative to said main body.

In this way it is possible to immediately use the auxiliary support member for building a subsequent tyre.

Preferably, after the radial-contraction step, said separation element is spring returned to the first support position. Said spring return allows automatic return of the separation element to the first support position.

According to an embodiment, the continuous elongated elastomeric element is laid starting from said first outer circumferential surface. In other words, laying of the continuous elongated element starts by making an initial end of this continuous elongated element adhere onto the first outer circumferential surface belonging to the building drum and winding the continuous elongated element itself towards the axial end of the drum and then on the circumferential support surface of the auxiliary member. In this way the abrasion-proof element can be made which therefore, for a portion thereof formed of a plurality of coils, remains on the first outer circumferential surface of the building drum and for the remaining portion formed of the remaining plurality of coils, remains on the circumferential support surface of the auxiliary member.

The first outer circumferential surface of the building drum shall therefore enable said adhesion of the initial end of the continuous elongated element.

According to an alternative embodiment, the continuous elongated elastomeric element is fully laid on said circumferential support surface radially external to said second outer circumferential surface. Under this situation, the circumferential support surface of the auxiliary member shall allow adhesion of the initial end of the continuous elongated element.

According to a further embodiment, the step of applying at least one tyre component around said second outer circumferential surface comprises the step of laying at least one strip-like element of elastomeric fabric at least partly on said circumferential support surface.

In addition, provision is made for a subsequent step of laying a continuous elongated elastomeric element on said at least one strip-like element in the form of coils disposed in side by side or radially superposed relationship.

Said strip-like element of elastomeric fabric can be the so-called "square-woven fabric", which is formed of crossed cords covered with elastomeric material, is used as further reinforcement for the bead, for the purpose of making the bead area stiffer, and is above all but not exclusively utilised in tyres of the racing type. Said strip like element of elastomeric fabric can consist of further reinforcing strip-like elements. Under this situation, the circumferential support surface of the auxiliary member shall allow adhesion of the initial end of the strip-like element of square-woven fabric.

Therefore, the present invention allows correct laying of the elongated element (forming the abrasion-proof elongated element and/or the liner and/or the underliner, for example) and/or of the strip-like elements of elastomeric fabric (square-woven fabric and/or further reinforcing fabrics) and/or of further reinforcing elements made of elastomeric material alone, because during laying it ensures adhesion of these components to the circumferential support surface of the auxiliary member and at the same time allows the already laid elongated element to be separated from said circumferential support surface without the risk that the partly formed carcass sleeve be damaged. In particular, the present invention prevents adhesion between the abrasion-proof elongated element and the circumferential support surface from causing stretching in an axial direction of the end flaps of the partly formed carcass sleeve, during extraction of the auxiliary support members.

The Applicant has verified that if this circumferential support surface of said separation element is not present, such a situation becomes particularly critical. In fact, if the square-woven fabric is not present and the abrasion-proof element adheres for a portion thereof to the first outer circumferential surface of the building drum and for the remaining portion directly to the second circumferential surface of the auxiliary member, traction exerted by the auxiliary support member would tend to separate the coils adhering to the first outer circumferential surface of the building drum from the coils adhering to the second circumferential surface of the auxiliary member.

Accordingly, the present invention enables manufacture of tyres different from each other as regards structure and materials of the beads, such as tyres with or without square-woven fabric, with abrasion-proof elongated element fully disposed on the circumferential support surface of the auxiliary support member or disposed partly on the circumferential support surface and partly on the first outer circumferential surface of the building drum, thus improving both production and quality aspects of the obtained products. Preferably, at least one carcass ply is made by laying of elementary components on said building drum.

In addition, preferably, application of said at least one carcass ply comprises a step of applying a plurality of strip-like elements disposed in succession along the circumferential extension of said first outer circumferential surface.

Preferably, in moving between the first support position and the second release position, said separation element is shiftable along an axial direction relative to the main body.

Preferably, in the first support position, said separation element is disposed around said second outer circumferential surface and in the second release position, said separation element projects at least partly in overhanging beyond said second outer circumferential surface. This structure allows easy separation of each auxiliary member from the carcass sleeve partly formed on the building drum to be obtained with a single and simple axial movement.

In accordance with a preferred embodiment, each of the auxiliary support members further comprises recovery devices interposed between said separation element and main body, to cause return of said separation element to the first support position.

In this way, it is possible to immediately use the auxiliary support member for building a subsequent tyre.

Preferably, the recovery devices are of the elastic type. Said devices of the elastic type are cheap and reliable.

In a preferred embodiment herein shown, said separation element is defined by a radially flexible laminar body. The laminar body will be cheap and simple to manufacture.

Preferably, said radially flexible laminar body has a plurality of lamellae. By varying the number of said lamellae it is possible to adjust stiffness of the laminar body.

In more detail, said radially flexible laminar body comprises a cylindrical portion movably linked to the main body, and the above mentioned plurality of lamellae connected in overhanging to said cylindrical portion and having distal ends to be positioned close to the building drum.

Preferably, said radially flexible laminar body has a plurality of narrow cuts delimiting said lamellae. In addition, the narrow cuts are oriented as the main axis of the respective circumferential support surface.

Advantageously, said radially flexible laminar body is made of metal. Metal ensures adhesion of the elements forming the carcass sleeve to the circumferential support surface of the auxiliary member during laying of said elements.

Preferably, said radially flexible laminar body has a thickness greater than about 0.2 mm.

In addition, said radially flexible laminar body has a thickness smaller than about 0.4 mm.

By varying the thickness, it is possible to adjust stiffness of the laminar body. Said thickness range allows such a deformation that sure separation of the auxiliary support member is ensured.

Each of the auxiliary support members further comprises recovery devices connected to the cylindrical portion and the main body, to return said separation element to the first support position.

Preferably, each of the recovery devices comprises a spring linked to the cylindrical portion and the main body.

Preferably, each of the recovery devices further comprises an idler pulley mounted on the main body and a cable in engagement on the pulley and linked to the cylindrical portion and the spring.

This structure is simple, reliable and cheap.

In a further preferred embodiment shown, said separation element is defined by a membrane.

Preferably said membrane has a distal edge integrally linked to a circular edge of the main body to be moved close to the building drum and a proximal edge, opposite to the distal edge, movably linked to said main body.

The membrane in the second release position takes a collapsed configuration, ensuring loss of contact between the circumferential support surface and the radially internal portions of the tubular ends and, therefore, elimination of the friction forces generated therebetween even when the "belting" effect of the end flap of the carcass sleeve is weak.

Preferably, each of the auxiliary support members comprises guides formed in the main body and runners integrally linked to the membrane at the proximal edge and slidable within said guides, to enable movement of said membrane between the first support position and the second release position.

These guides ensure a precise and regular movement of the membrane.

In the embodiment shown, the guides are grooves formed in said second outer circumferential surface of the main body.

Preferably, the guides are oriented as the main axis of the respective circumferential support surface.

Each of the auxiliary support members further comprises recovery devices connected to the runners and the main body, to return said membrane to the first support position. Preferably, each of the recovery devices comprises a spring linked to a respective runner and the main body.
Preferably, each of the recovery devices further comprises an idler pulley mounted on the main body and a cable in engagement on the pulley and linked to the runner and the spring.

This structure is simple, reliable and cheap.

The recovery devices in addition keep said membrane tensioned in the first support position.

In addition, the membrane is made of elastomeric material.

Preferably, the membrane comprises a plurality of cords covered with elastomeric material.

The elastomeric material similar to that of which the components of the carcass structure are made ensures adhesion of these components to the circumferential support surface of the auxiliary member during laying of same.

Preferably, the membrane is made of fabric.

The presence of the crossed cords of the fabric ensures the shape of the membrane and correct operation of same to be maintained.

Further features and advantages will become more apparent from the detailed description of a preferred but not exclusive embodiment of a process and an apparatus for building tyres, in accordance with the present invention.

This description will be set out hereinafter with reference to the accompanying drawings, given by way of non-limiting example, in which:
- Fig. 1 diagrammatically shows, in diametrical section, a step of applying a carcass ply around a building drum provided with two auxiliary support members;
- Fig. 2 is a perspective view to an enlarged scale relative to Fig. 1 of one of the auxiliary support members;
- Fig. 2a shows an enlarged detail of the auxiliary support member seen in Fig. 2;
- Fig. 3 shows one of the auxiliary support members to an enlarged scale relative to Fig. 1 and in diametrical section;
- Fig. 3a shows an enlarged portion of the auxiliary support member seen in Fig. 3;
- Fig. 4 is a front view of the auxiliary support member according to arrow "F" in Fig. 3;
- Figs. 5a, 5b and 5c show steps in succession for drawing out one of the auxiliary support members from the respective tubular end of the partly formed carcass sleeve;
- Fig. 6 shows an element of the auxiliary support member belonging to an alternative embodiment of said auxiliary support member;
- Figs. 6a and 6b show steps in succession for drawing out one of the auxiliary support members, according to an alternative embodiment, from the respective tubular end of the partly formed carcass sleeve;
- Fig. 7 shows a step of drawing out one of the auxiliary support members, according to the alternative embodiment, from the respective tubular end of the partly formed carcass sleeve in a construction variant of this carcass sleeve;
- Fig. 8 shows, to an enlarged scale relative to Fig. 1, a step in which annular anchoring structures are coaxially fitted on the respective end flaps of the carcass ply/plies;
- Fig. 9 shows a tyre being processed in the step during which the carcass sleeve is shaped for application of an outer sleeve thereto.

With reference to the drawings, an apparatus for building tyres for vehicle wheels, provided for putting into practice the process according to the present invention has been generally identified by reference numeral 1.

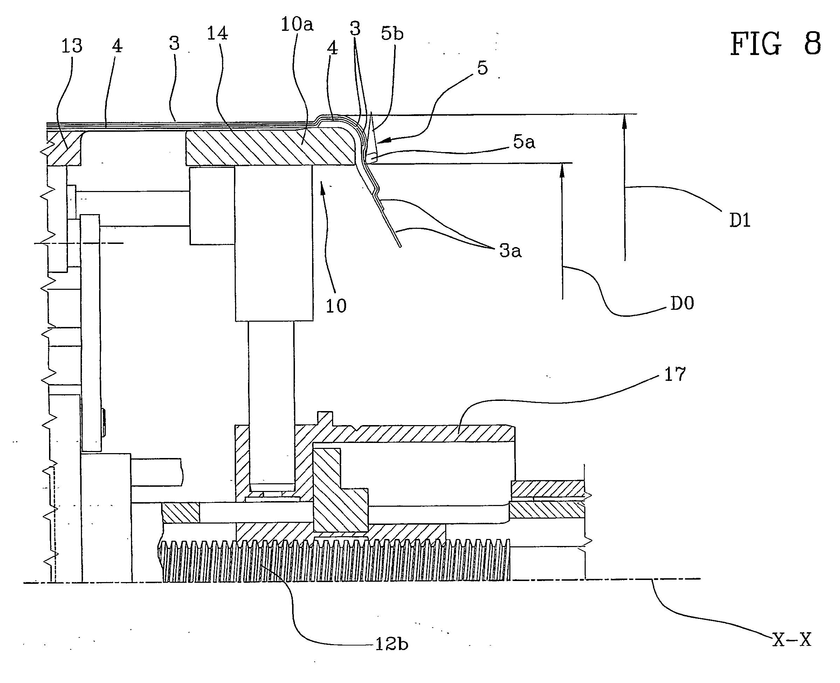

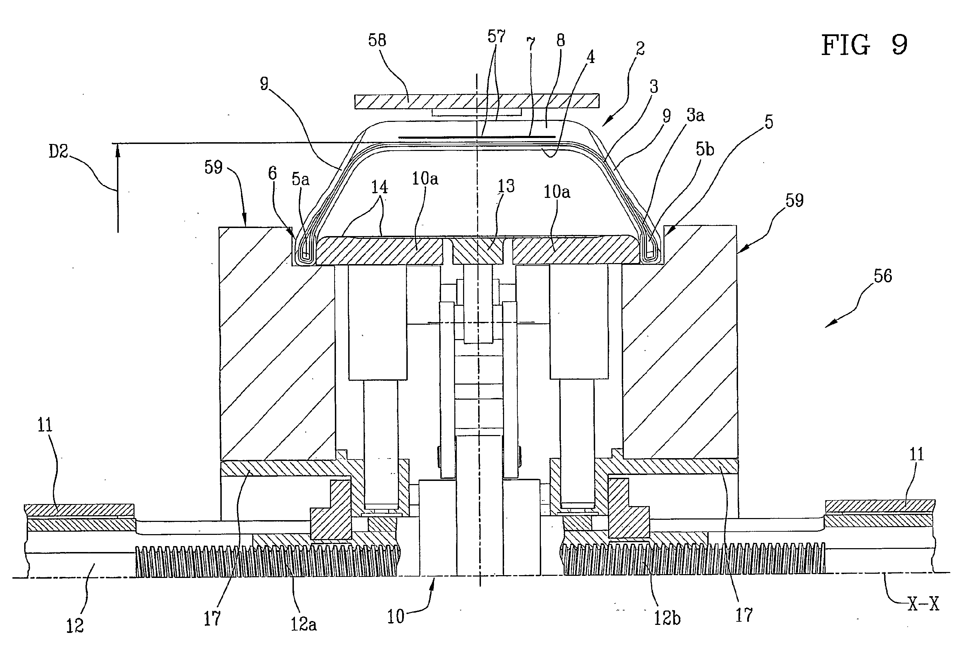

Apparatus 1 is intended for manufacturing tyres 2 (Fig. 9) essentially comprising at least one carcass ply 3 preferably internally coated with a layer of airtight elastomeric material called "liner" 4. Two annular anchoring structures 5 each comprising a so-called bead core 5a preferably carrying an elastomeric filler 5b at a radially external position, are in engagement with respective end flaps 3a of the carcass ply/plies 3. The annular anchoring structures 5 are integrated close to regions usually identified as "beads" 6, at which engagement between tyre 2 and a respective mounting rim (not shown) usually takes place, according to a fitting diameter D0 determined by the inner diametrical sizes of the annular anchoring structures 5 (Fig. 8).

A belt structure 7 is circumferentially applied around the carcass ply/plies 3, and a tread band 8 circumferentially overlaps the belt structure 7. Two sidewalls 9, each extending from the corresponding bead 6 to a corresponding side edge of the tread band 8, are applied at laterally opposite positions onto the carcass ply/plies 3.
Apparatus 1 comprises a building drum 10 having two halves 10a supported by a central shaft 11 extending along a geometric axis "X-X" of the building drum 10. Halves 10a can be axially moved close to each other, upon command of a threaded bar 12 for example, that is operatively disposed within the central shaft 11 and carries two threaded portions 12a, 12b, a right-handed portion and a left-handed portion respectively, each engaging one of halves 10a. Halves 10a of the building drum 10 are consequently induced to simultaneously translate in respectively opposite directions along the central shaft 11, following rotations imparted to the threaded bar 12 through an actuator (not shown) to be operatively coupled to an end of the central shaft 11.

The building drum 10 can further comprise a central section 13 slidably engaging halves 10a and extending in a surface continuity relationship relative to the same so as to define therewith, at a radially external position, a first substantially continuous outer circumferential surface 14.

Each of halves 10a and the central section 13 are made up of respective circumferential sectors, radially movable between a rest condition (not shown) at which they are disposed radially close to the geometric axis "X-X" to give the building drum 10 a diametrical bulkiness smaller than the fitting diameter "D0" of the tyre being processed, in order to allow removal of tyre 2 being processed from the building drum, and a work condition at which, as shown in the figures, they extend in circumferential continuity relationship so as to form said outer surface 14 defining an application diameter "D1" preferably greater than the fitting diameter "D0" (Fig. 8).
The building drum 10 is adapted to be transferred by at least one robotized arm (not shown), or transfer devices of other type operating on at least one grip end 11a provided by the central shaft 11, to one or more work stations to enable execution of different working steps aiming at assembling tyre 2 under processing.

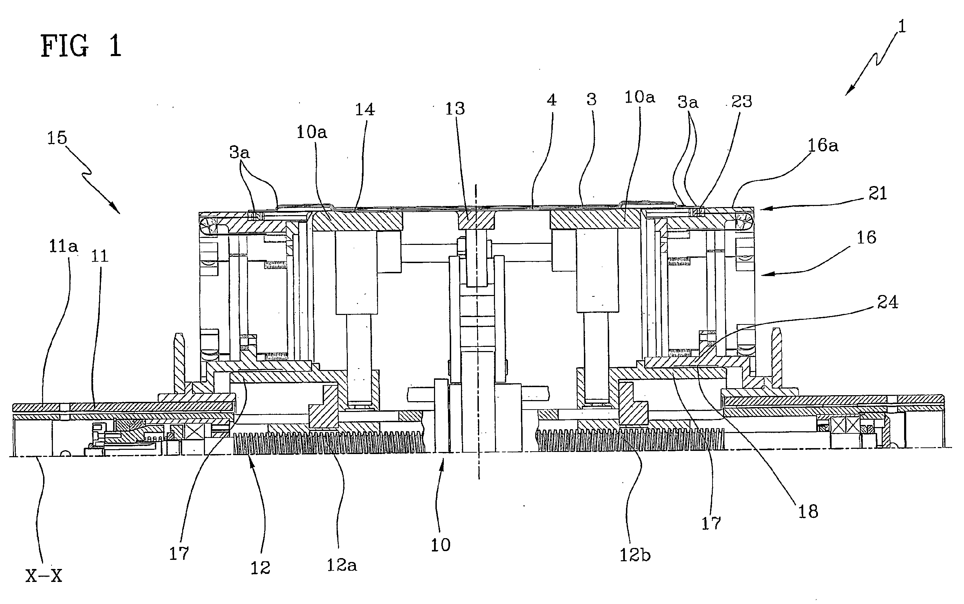

In more detail, the building drum 10 for example can be first engaged in a building station 15 (Figs. 1 to 8) in which a so-called carcass sleeve is made which comprises the carcass ply/plies 3 coupled to the respective annular anchoring structures 5.

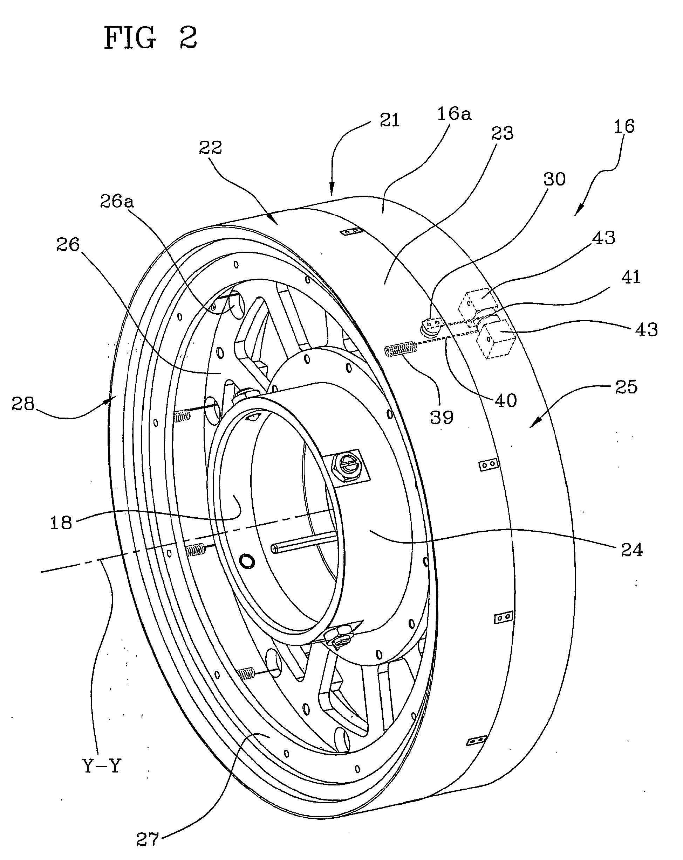

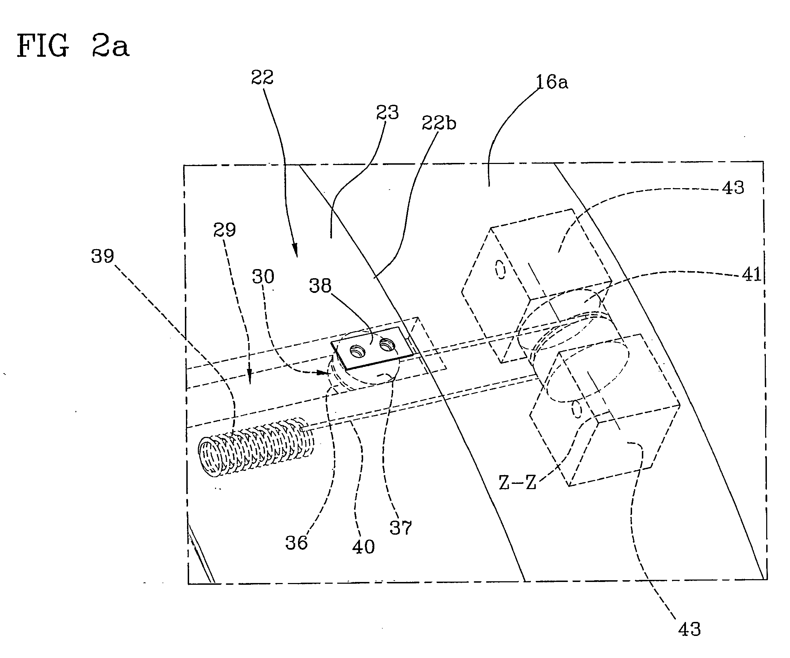

At least one external handling device (not shown as it can be made in known manner) carries out positioning of auxiliary support members 16 made in the form of two annular elements for example (Fig. 2), in axially approached relationship with the building drum 10 on axially opposite sides.

The auxiliary support members 16 have respective second outer circumferential surfaces 16a preferably with a substantially cylindrical conformation the diameter of which is substantially the same as the application diameter "D1". When approaching has occurred, the second outer circumferential surfaces 16a extend in continuity relationship in the continuation of the first outer circumferential surface 14. Engagement of the auxiliary support members 16 with the building drum 10 takes place at respective connecting members 17 carried by the building drum 10 and each made in the form of a cylindrical sleeve for example, which is integrally carried by one of halves 10a of the building drum 10 and can be operatively coupled to an engagement seat 18 carried by the respective auxiliary support member 16.

Coupling members not shown are adapted to automatically engage the respective connecting members 17, so as to retain each auxiliary support member 16 in engagement with the building drum 10 also after release of members 17 by said external handling device.

The building drum 10 therefore lends itself to be transferred, if necessary, between at least one first and one second work unit (not shown) provided in the building station 15, together with the auxiliary support members 16 linked thereto.

Operating in the building station 15 are auxiliary devices (not shown) adapted to apply components of the carcass sleeve at the building drum 10.

The carcass ply/plies 3 and/or other parts of tyre 2 are preferably made by laying of said elementary components.

These elementary components are adapted to be used in an appropriate amount so as to form one or more of the constituent elements of the tyre described above, without storage of semifinished products being required.

In more detail, these auxiliary devices can for example comprise one or more dispensers supplying at least one continuous elongated element of elastomeric material while the building drum 10 is being driven in rotation around its geometric axis "X-X", so as to form said liner 4 and/or underliner on the first outer circumferential surface 14 and on the second outer circumferential surfaces 16a.

In addition or as an alternative to liner 4 and/or the underliner, the auxiliary devices can be designed to form further components on the second outer circumferential surfaces 16a such as abrasion-proof elongated elements 19 to be incorporated at the beads 6 and/or they can be designed to lay strip-like elements of elastomeric fabric 20 forming reinforcing fabrics such as the square-woven fabric, and/or, in the case of the so-called run-flat tyres, auxiliary supporting inserts made of elastomeric material alone (the so-called sidewall inserts) applied to the respective halves 10a of the building drum 10, so as to be then incorporated into tyre 2 in the region of sidewalls 9.

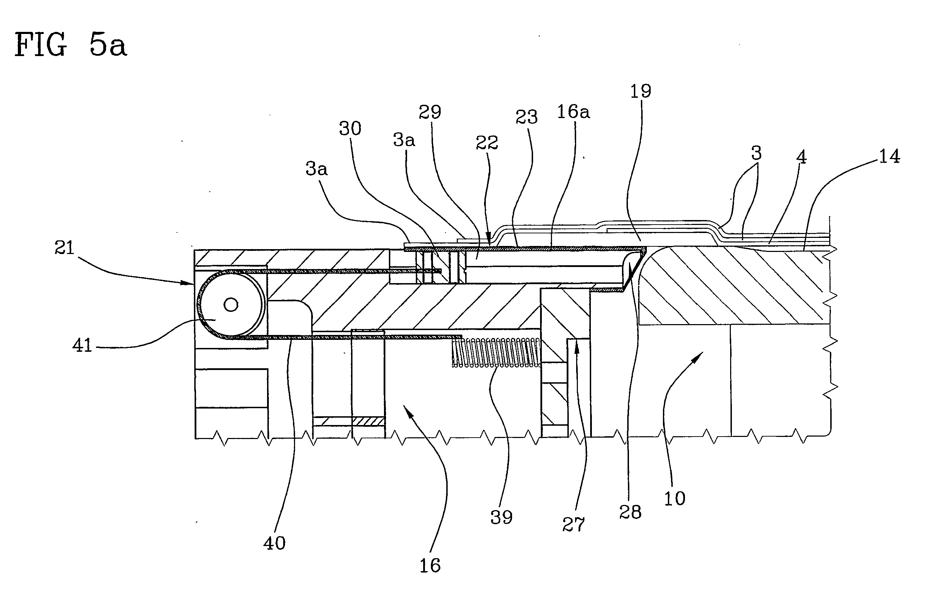

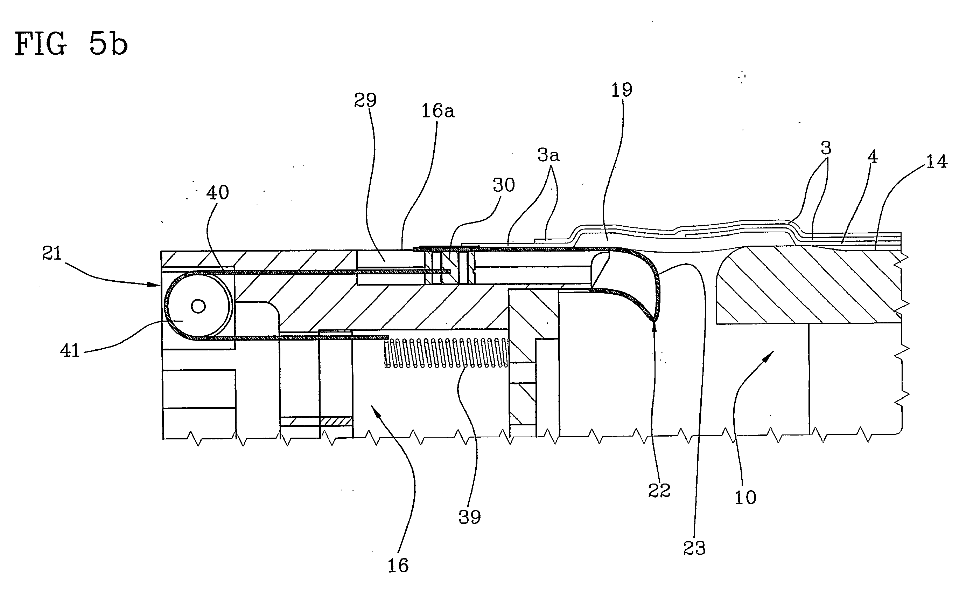

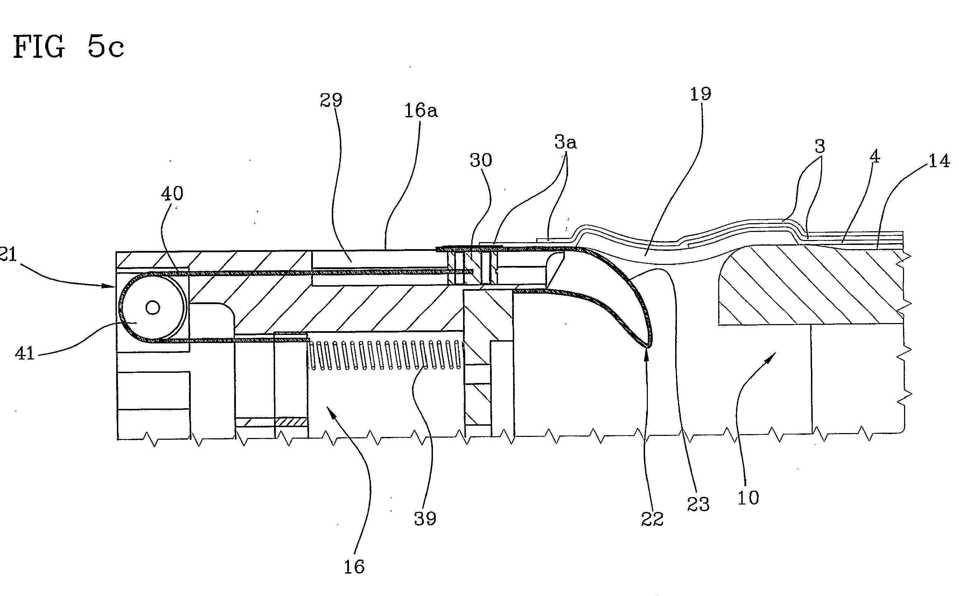

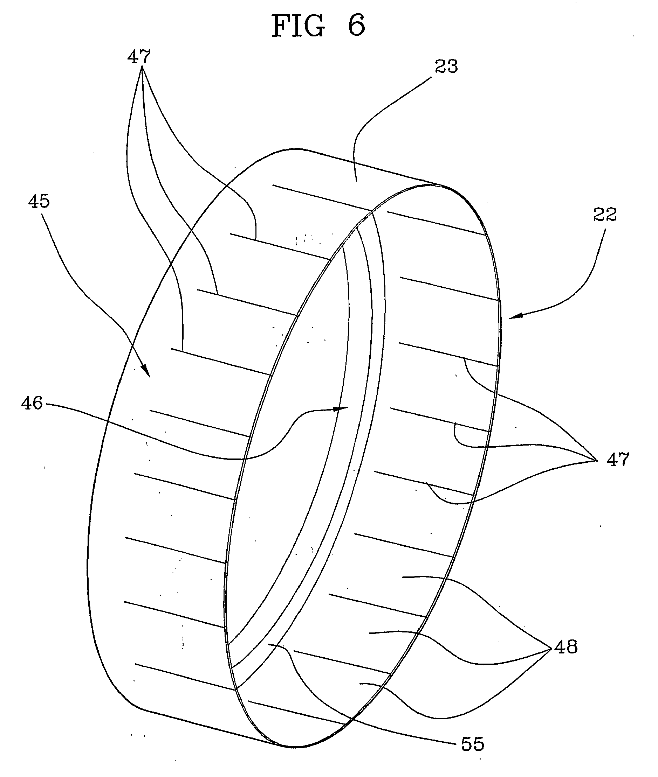

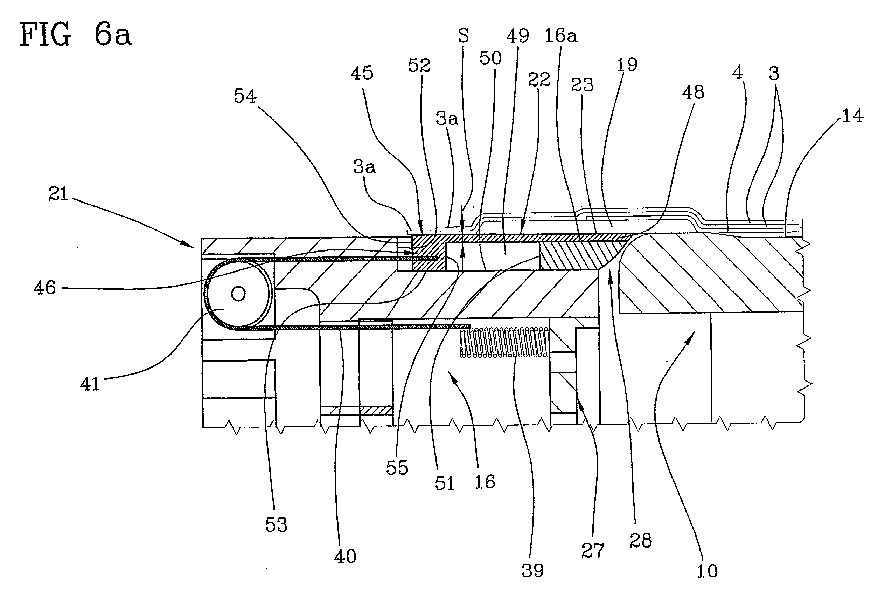

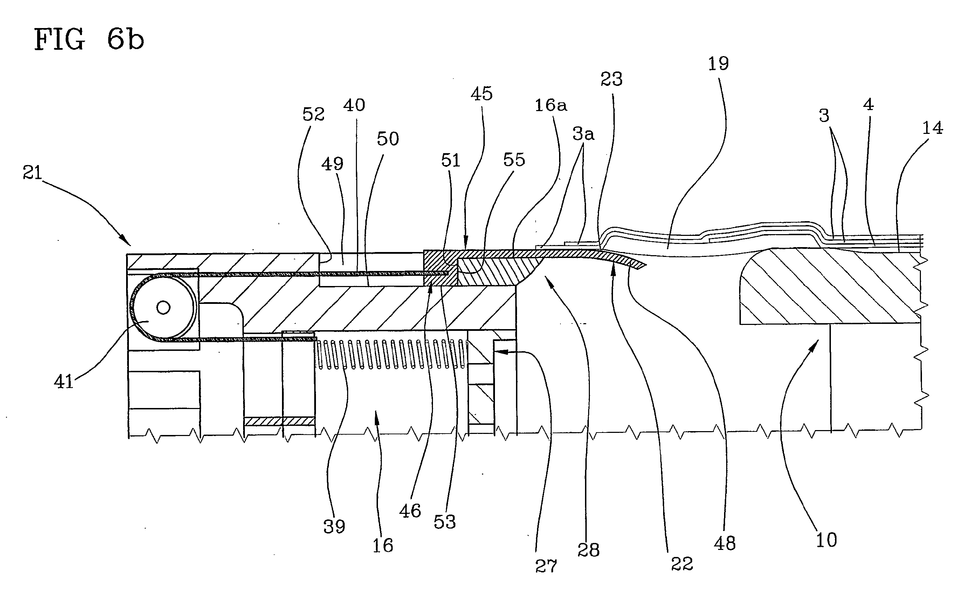

As shown in Figs. 5a, 5b, 5c, 6a and 6b, before laying liner 4, a continuous elongated element is laid down into coils disposed in side by side or radially superposed relationship, starting from the first outer circumferential surface 14 of drum 10 to the second outer circumferential surface 16a, so as to form an abrasion-proof elongated element 19 that therefore lies astride the two mentioned surfaces 14, 16a. According to an alternative construction of the carcass structure, not shown, the abrasion-proof elongated element 19 is fully laid on the second outer circumferential surface 16a.

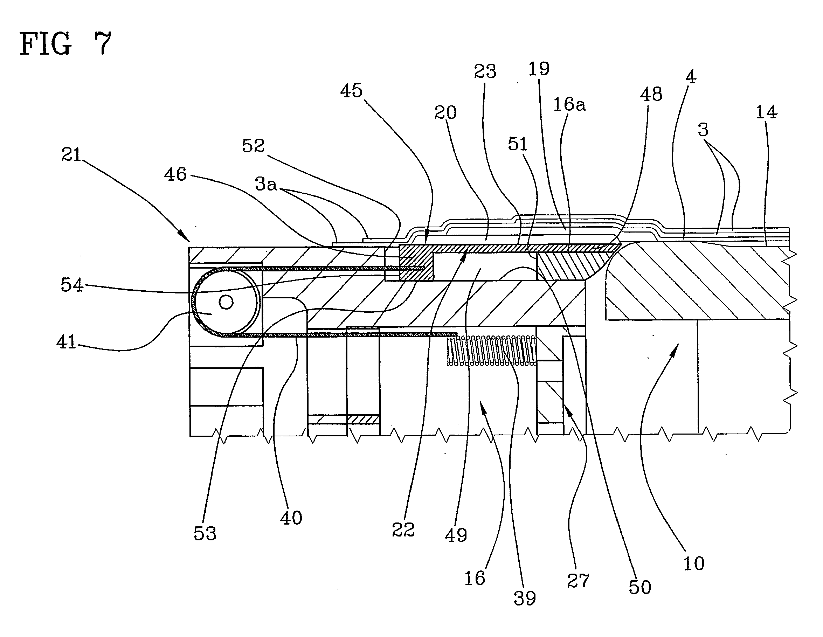

As shown in Fig. 7, before laying the abrasion-proof elongated element 19, the strip-like element of elastomeric fabric (forming the square-woven fabric) 20 is first laid, being fully disposed on the second outer circumferential surface 16a.
After formation of the above mentioned components 4, 19, 20, devices not shown as can be made in any convenient manner, apply the carcass ply/plies 3 around the first outer circumferential surface 14, according to said application diameter "D1". Each carcass ply 3 can consist of a manufactured article in the form of a continuous strip previously cut to the size of the circumferential extension of the first outer circumferential surface 14 and fed to the latter while the building drum is rotating around its geometric axis "X-X", so as to cause winding of the strip-like element around said first outer circumferential surface 14.

Alternatively, according to a preferred embodiment, the application devices comprise members for sequential application of a plurality of strip-like elements disposed transversely of the circumferential extension of the first outer circumferential surface 14, while the building drum 10 is being driven in rotation in a step-by-step movement, in the same manner as described in US Patent 6,328,084 for example, in the name of the same Applicant.

The carcass ply/plies 3 are then preferably directly formed on the building drum 10, by use of the strip-like elements applied in mutual side by side relationship so as to cover the whole circumferential extension of the first outer circumferential surface 14.

Preferably, the first outer circumferential surface 14 has a smaller axial size than the width of said at least one carcass ply 3, so that the carcass ply/plies 3 laid on the building drum 10 axially project from the opposite ends of the first outer circumferential surface 14 and are at least partly supported, together with liner 4 and/or the underliner and/or abrasion-proof elongated elements 19 and/or the square-woven fabric 20, by said second outer circumferential surfaces 16a belonging to the auxiliary support members 16.

Each of the auxiliary support members 16 comprises a main body 21 of annular shape and at least one separation element 22 mounted at a radially external position on the main body 21, carrying a circumferential support surface 23 at least partly lying in superposed relationship with the second outer circumferential surface 16a. The separation element 22 is movable relative to the main body 21 along an axial direction between a first support position at which the main body 21 supports the separation element 22 along radial directions, and a second release position, at which the separation element 22 is free to move along said radial directions.

In the first support position, the separation element 22 is fully disposed around the second outer circumferential surface 16a belonging to the main body 21 and takes a cylindrical shape (Figs. 1, 2, 2a, 3, 3a, 5a, 6, 6a, 7). The separation element 22 rests at least partly on the second outer circumferential surface 16a and is therefore able to withstand without being deformed, the centripetal radial forces exerted during and after laying by the components (liner 4 and/or abrasion-proof elongated elements 19 and/or square-woven fabric 20, etc.) lying at the end flaps 3a of the carcass ply/plies 3.

In the second release position (Figs. 5b, 5c, 6b), the separation element 22 is no longer supported by the second outer circumferential surface 16a because it at least partly projects in overhanging beyond said second outer circumferential surface 16a and is free to become deformed under the action of centripetal radial forces exerted, when laying has taken place, by components 4, 19, 20 placed at the end flaps 3a and by the end flaps 3a themselves.

In the embodiment shown in Figs. 1, 2, 2a, 3, 3a, 4, 5a, 5b and 5c, the main body 21 comprises a tubular body 24 delimiting the engagement seat 18 with the connecting member 17 carried by the building drum 10. When the auxiliary support member 16 is in engagement with the building drum 10, the geometric axis "X-X" of the building drum 10 is coincident with the main axis "Y-Y" of the tubular body 24.

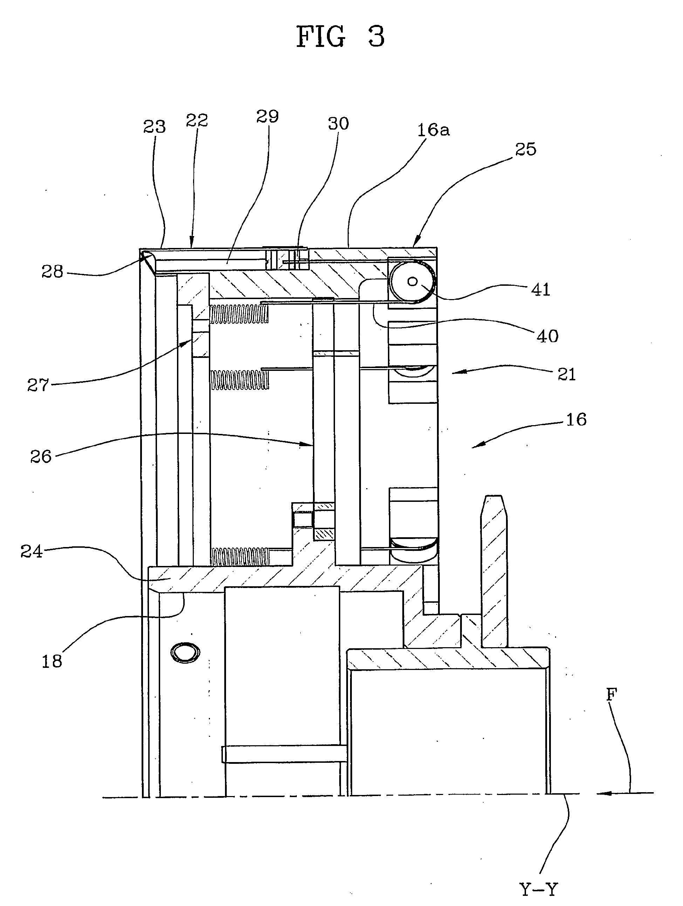

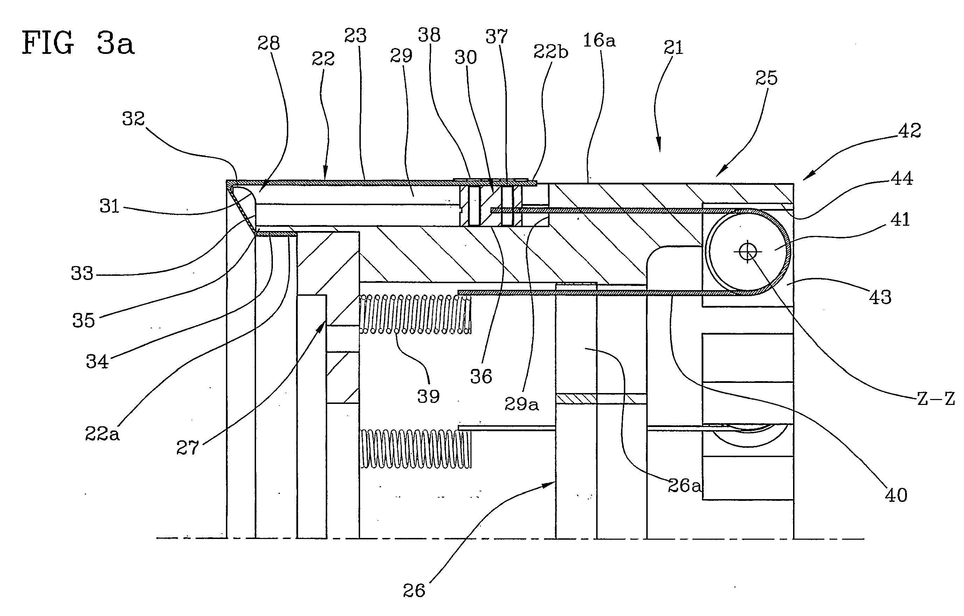

The main body 21 further comprises a radially external cylindrical body 25 spaced apart from and coaxial with the tubular body 24 and connected thereto via a circular plate 26. The cylindrical body 25 is provided with a radially internal annular plate 27 disposed close to a circular edge 28 of the cylindrical body 25 itself (Figs. 2 and 3). This circular edge 28 is placed close to the building drum 10 when the auxiliary support member 16 is in engagement with the building drum 10 itself.

Formed in the radially external surface of the cylindrical body 25 which is at least partly coincident with the second outer circumferential surface 16a mentioned above, are grooves 29 parallel to the main axis "Y-Y" and extending from the circular edge 28 of the cylindrical body 25 until a final end 29a approximately placed half-way on the length of the cylindrical body 25 measured along said main axis "Y-Y" (Figs. 2a, 3, 3a, 5a, 5b, 5c). Grooves 29 act as guides for runners 30, each of which is slidably inserted in one of said grooves.

The separation element 22 is defined by a membrane of annular shape, which membrane 22 has a distal edge 22a thereof (Fig. 3a) rigidly connected to the circumferential edge 28 of the cylindrical body 25 and a proximal edge 22b, opposite to the distal one 22a, movably connected to the main body 21 by means of runners 30. Membrane 22 is made for example like a "sock" of fabric comprising a plurality of crossed cords covered with a raw or half-vulcanised elastomeric material.

In more detail, said circular edge 28 has a flared and concave surface 31 connected to the second outer circumferential surface 16a at a first circular edge 32, an annular surface 33 extending towards the main axis "Y-Y" from the flared surface 31 and a cylindrical surface 34 coaxial with and parallel to said main axis "Y-Y". The cylindrical surface 34 extends from the annular surface 33 to the annular plate 27 and forms a second circular edge 35 with said annular surface 33. The distal edge 22a of membrane 22 is joined to the cylindrical surface 34.

With reference to Figs. 2a and 3a, each runner 30 has the form of a small cylinder a first base 36 of which rests on the bottom of groove 29 and the second base 37 of which is substantially disposed flush with the second outer circumferential surface 16a of the cylindrical body 25. Resting on the second base 37 is a portion of membrane 22 close to the proximal edge 22b of same, which portion is retained on the respective runner 30 by a small plate 38 disposed over said portion and linked to runner 30 and membrane 22 for instance by means of rivets. Membrane 22 is therefore tightened between the small cylinder 30 and the small plate 38. In addition, each runner 30 is connected through a respective spring 39, a respective cable 40 and a respective idler pulley 41, to the cylindrical body 25.

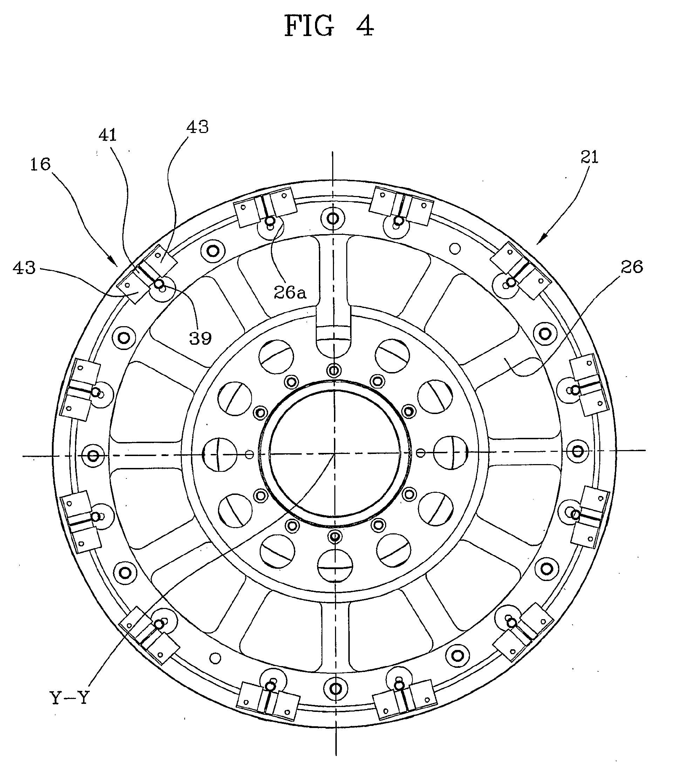

The embodiment illustrated shows twelve idler pulleys 41 angularly spaced apart from each other (Fig. 4), each placed at a respective groove 29. In more detail (Figs. 2a, 3a and 4), pulley 41 is located at a radially internal position relative to the second outer circumferential surface 16a of the cylindrical body 25 and close to an edge 42 of said cylindrical body 25 opposite to the circular edge 28 to be moved close to the main drum 10. Pulley 41 is rotatably supported between a pair of blocks 43 mounted on a radially internal surface 44 of the cylindrical body 25 and is rotating around an axis "Z-Z" of its own.

Spring 39 is of the helical type, works in traction and has one end linked to the annular plate 27 and an opposite end facing pulley 41 that is connected to cable 40. Cable 40 has a first end joined to the respective runner 30, is partly wrapped around pulley 41, passes through an opening 26a formed in the circular plate 26 and has a second end joined to spring 39. Spring 39 therefore tends to retain the respective runner 30 towards the final end 29a of groove 29, i.e. towards pulley 41. This configuration corresponds to the first support position of the separation element 22 relative to the main body 21. In fact, the action of springs 39 keeps membrane 22 taut on the second outer circumferential surface 16a of the cylindrical body 25 and on the first and second circular edges 32, 35, as shown in Figs. 1, 2, 2a, 3, 3a and 5a. Membrane 22 maintains this configuration until formation of the carcass ply/plies 3 has been completed.

When formation of the carcass ply/plies 3 is over, the auxiliary support members 16 are released from the respective connecting members 17. This disengagement can be for example obtained with the aid of said external handling device by an action involving axial moving apart from the respective halves 10a of the building drum 10, so that the circumferential support surfaces 23 are slipped off the abrasion-proof elongated elements 19, and/or liner 4, and/or the square-woven fabric 20 and/or the carcass ply/plies 3. When disengagement has occurred, the auxiliary support members 16 can remain in engagement with the external handling device, ready for being used again in a new working cycle.

During disengagement, the main body 21 of each of the two auxiliary support members 16 is axially moved apart from the building drum 10, while initially components 4, 19, 20 positioned close to the end flaps 3a of the carcass ply/plies 3 lying directly in contact with membrane 22 (e.g. the abrasion-proof inserts 19, and/or liner 4, and/or square-woven fabric 20, and/or the carcass ply 3 itself) remain attached to membrane 22, by a cohesion effect between elastomeric materials. As a result, moving apart of the main body 21 gives rise to mutual displacement between body 21 and membrane 22 towards the second release position. Runners 30 slide in the respective guides 29 so that springs 39 are tensioned and membrane 22 begins projecting beyond the first circular edge 32, being no longer supported by the second outer circumferential surface 16a. Collapsing of membrane 22 causes separation of same from the respective end flap 3a of the carcass ply/plies 3 and/or the abrasion-proof inserts 19, and/or liner 4, and/or square-woven fabric 20, also due to belting of said component/s, that is/are not longer supported. Belting is mainly due to the continuous elongated element forming the abrasion-proof insert 19 and/or liner 4.

When separation has been completed, membrane 22 no longer retained by the components of the tyre being built, is returned to the first support position by springs 39 also acting as recovery devices.

In the alternative embodiment diagrammatically shown in Figs. 6, 6a, 6b and 7, the separation element 22 is a substantially cylindrical laminar body that is radially flexible and preferably made of sheet metal. Thickness of the sheet metal is preferably included between about 0.2 mm and about 0.4 mm.

The laminar body 22 (Fig. 6) comprises a cylindrical portion 45 provided with a radially internal annular ridge 46 located close to an edge of said cylindrical portion 45. The laminar body 22 further has a plurality of cuts 47 parallel to the main axis "X-X" of the laminar body 22, which cuts 47 delimit a plurality of lamellae 48 that are connected in overhanging to the cylindrical portion 45 on the opposite side from the annular ridge 46 and can be positioned at the building drum 10.

The structure of the main body 21 is similar to that of the embodiment seen in Figs. 1, 2, 3, 4, 5a, 5b and 5c but, in place of guides and runners, a radially external circular seat 49 is formed in the second outer circumferential surface 16a of the cylindrical body 25, inside which the annular ridge 46 is movably housed. In more detail, the circular seat 49 is bounded by a bottom wall 50 having a circumferential extension, a first side wall closer to the circumferential edge 28 of the cylindrical body 25 movable close to the main drum 10 and a second side wall 52 closer to the opposite edge 42 of said cylindrical body 25.

The annular ridge 46 has an end wall 53 parallel to the planar extension of lamellae 48 and in contact with the bottom wall 50 of the circular seat 49, a first side wall 54 facing the second side wall 52 of the circular seat 49 and a second side wall 55 facing the first side wall 51 of the circular seat 49. The width of the annular ridge 46 intended as the distance between the first and second side walls 54, 55, is smaller than the width of the circular seat 49, intended as the distance between the first and second side walls 51, 52 thereof. In addition, lamellae 48 rest on the portion of the second outer circumferential surface 16a extending between the first side wall 51 of the circular seat 49 and the circular edge 28.

Therefore, the annular ridge 46 and the whole laminar body 22 therewith can slide within the circular seat 49 along an axial direction between the first support position and the second release position. In the first support position (Fig. 6a), the first side wall 54 of the annular ridge 46 is placed close to the second side wall 52 of the circular seat 49 and the end of lamellae 48 lies flush with the circular edge 28. In the second release position (Fig. 6b), the second side wall 55 of the annular ridge 46 is placed close to the first side wall 51 of the circular seat 49 and lamellae 48 project in overhanging beyond the circular edge 28.

Also the alternative embodiment diagrammatically shown in Figs. 6, 6a, 6b and 7 comprises recovery devices consisting of springs 39, pulleys 41 and cables 40 structured as in the embodiment seen in Figs. 1, 2, 3, 4, 5a and 5b, but the first end of each cable 40 is joined to the annular ridge 46 instead of being joined to runner 30.

During disengagement, the main body 21 of each of the two auxiliary support members 16 is axially moved apart from the building drum 10 while the components located close to the end flaps 3a of the carcass ply/plies 3 lying directly in contact with lamellae 48 tend to remain attached to the laminar body 22, due to a cohesion effect between the elastomeric materials and the metal. As a result, moving away of the main body 21 generates mutual displacement between body 21 and the laminar body 22 towards the second release position. The annular ridge 46 slides in the circular seat 49 tensioning springs 46, and lamellae 48 begin projecting beyond the circular edge 28, being no longer supported by the second outer circumferential surface 16a.

In the second release position (Fig. 6b), the first side wall 51 of the circular seat 49 acts as an end-of-stroke stop. Bending of lamellae 48 causes separation of same from the respective end flap 3a of the carcass ply/plies 3 and/or the abrasion-proof inserts 19, and/or liner 4, and/or the square-woven fabric 20, also due to belting (radial contraction) of said components that are no longer supported. When separation has been completed, the laminar body 22 is returned to the first support position by springs 39.

Removal of the circumferential support surfaces 23 makes it possible, after optional transfer of the building drum 10 to a further working unit, to fold towards the geometric axis "X-X" of the building drum 10, the end flaps 3a of the carcass ply/plies 3 applied around the building drum 10, with the aid of rollers for example, or other devices not shown as they can be made in any convenient manner.

Locator members not shown as they can be made in known manner carry out fitting of each of the annular anchoring structures 5 around one of the end flaps 3a of the carcass ply/plies 3 folded towards the geometric axis "X-X", placing it in axial abutment relationship against the respective half of the building drum 10 (Fig. 8).

When placement has been completed, turning-up members, not shown, turn each of the end flaps 3a up around the respective annular anchoring structure 5, so as to stabilise engagement of same with the carcass ply/plies 3, causing formation of said carcass sleeve.

When engagement of the annular anchoring structures 5 has been completed, or concurrently with this operating step, application of the sidewalls 9 can be carried out.

The building drum 10 carrying the carcass sleeve is then preferably transferred to a position 56 (Fig. 9) external to the building station 15 so as to receive in engagement, an outer sleeve 57 integrating the belt structure 7 preferably already coupled to the tread band 8.

The outer sleeve 57, having an inner diameter "D2" greater than the application diameter "D1", can be prepared in advance by formation or winding of one or more belt layers adapted to make the belt structure 7 on an auxiliary drum (not shown), and subsequent winding of the tread band 8 on the belt structure 7 carried by the auxiliary drum. In more detail, building of the tread band 8 can be carried out by dispenser members supplying a continuous elongated elastomeric element applied in the form of coils disposed in side by side and/or radially superposed relationship onto the belt structure 7 carried by the auxiliary drum, while the latter is being driven in rotation.

According to an alternative embodiment, at least one portion of sidewalls 9 can be lastly built on the outer sleeve 57.

The outer sleeve 57 thus formed is adapted to be removed from the auxiliary drum, by an transfer ring 58 for example, or other suitable devices that subsequently dispose it at a coaxially centred position around the carcass sleeve carried by the building drum 10.

Shaping devices act then on the building drum 10 to shape the carcass sleeve into a toroidal configuration, so as to cause application of same against a radially internal surface of the outer sleeve 57.

The shaping devices can for example comprise said actuator (not shown) designed to drive the threaded bar 12 in rotation to cause mutual axial approaching of halves 10a of the drum and, consequently, of the annular anchoring structures 5 of the carcass sleeve. Preferably, the shaping devices further comprise inflating members, not shown, adapted to feed the carcass sleeve with a working fluid and cause radial expansion of same by inflation, during mutual approaching of the annular anchoring structures 5.

Then, at least one auxiliary shaping member 59 (only diagrammatically shown in Fig. 9) is preferably engaged with the building drum 10, being suitable for integration with the shaping devices to enable execution of the shaping step of the carcass sleeve.

When the shaping step is over, the building drum 10 can then be possibly transferred to at least one additional working station (not shown).

At the end of building, tyre 2 can be removed from the building drum 10 after disengagement of the auxiliary shaping members 59 and radial contraction of the drum itself, to be submitted to a vulcanisation and moulding step to be carried out in any convenient manner.

## Claims

1. A process for building tyres, comprising the steps of:
- providing a building drum (10) having a first outer circumferential surface (14);
- engaging auxiliary support members (16) with the building drum (10), each in axially approached relationship with an axial end of the building drum (10), each auxiliary support member (16) having a second outer circumferential surface (16a) extending in the continuation of said first outer circumferential surface (14);
- providing at least one separation element (22) at a radially external position on at least one of said auxiliary support members (16), said separation element (22) having a circumferential support surface (23);
- applying at least one tyre component (4; 19; 20) around at least said second outer circumferential surface (16a), which tyre component lies at least partly on said circumferential support surface (23);
- axially moving said auxiliary support members (16) away from said building drum (10) so as to radially contract the circumferential support surface (23) of each separation element (22) to decouple it from said respective at least one component (4; 19; 20) of the tyre (2).

2. A process as claimed in claim 1, wherein the radial contraction of the circumferential support surface (23) consists in collapsing of a membrane included in said separation element (22).

3. A process as claimed in claim 1, wherein the radial contraction of the circumferential support surface (23) consists in bending of a laminar body included in said separation element (22).

4. A process as claimed in claim 1, wherein each auxiliary support member (16) comprises a main body (21), said separation element (22) being movable relative to said main body (21) between a first support position, at which the main body (21) supports said separation element (22) along radial directions, and a second release position, at which said separation element (22) is free to move along said radial directions.

5. A process as claimed in claim 4, wherein the step of radially contracting the circumferential support surface (23) is carried out by shifting the main body (21) relative to the separation element (22) from the first to the second positions.

6. A process as claimed in claim 5, wherein, for movement between the first support position and the second release position, the main body (21) is axially shifted relative to said separation element (22).

7. A process as claimed in claim 1, wherein the circumferential support surface (23) is axially moved apart after the step of radially contracting said circumferential support surface (23).

8. A process as claimed in claim 4, further comprising the steps of:
- axially moving each main body (21) away from the building drum (10) from the first to the second positions, while said circumferential support surface (23) is still in contact with said at least one tyre component (4; 19; 20) until causing radial contraction of said circumferential support surface (23) and separation of said circumferential support surface (23) from the respective tyre component (4; 19; 20);
- axially moving the main body (21) and the separation element (22) away from the building drum (10).

9. A process as claimed in anyone of the preceding claims, wherein radial contraction of the circumferential support surface (23) is caused by belting of said at least one tyre component (4; 19) on said circumferential support surface (23).

10. A process as claimed in claim 4, wherein, after the radial-contraction step, said separation element (22) is brought back to the first support position relative to said main body (21).

11. A process as claimed in claim 4, wherein, after the radial-contraction step, said separation element (22) is spring returned to the first support position.

12. A process as claimed in claim 1, wherein the step of applying said at least one component (4; 19; 20) of the tyre (2) around said second outer circumferential surface (16a) comprises the step of laying a continuous elongated elastomeric element into coils disposed in side by side or radially superposed relationship.

13. A process as claimed in claim 1, wherein the step of applying at least one component (4; 19; 20) of the tyre (2) around said second outer circumferential surface (16a) comprises the step of laying at least one strip-like element of elastomeric fabric (20) at least partly on said circumferential support surface (23).

14. A process as claimed in the preceding claim, wherein provision is made for a subsequent step of laying a continuous elongated elastomeric element on said at least one strip-like element (20) in the form of coils disposed in side by side or radially superposed relationship.

15. A process as claimed in one or more of the preceding claims, wherein at least one carcass ply (3) is made by laying of elementary components on said building drum (10).

16. A process as claimed in the preceding claim, wherein application of said at least one carcass ply (3) comprises a step of applying a plurality of strip-like elements disposed in succession along the circumferential extension of said first outer circumferential surface (14).

17. An apparatus for building tyres, comprising:
- a building drum (10) having at least one first outer circumferential surface (14);
- at least one pair of auxiliary support members (16) each comprising a main body (21), said auxiliary support members (16) being susceptible of removable engagement with the building drum (10), each in axially approached relationship with a respective end of the building drum (10), and having second outer circumferential surfaces (16a) extending in the continuation of said first outer circumferential surface (14) to bear at least one component (4; 19; 20) of the tyre (2);
- at least one separation element (22) provided at a radially external position on at least one of said auxiliary support members (16), carrying a circumferential support surface (23); each separation element (22) being movable relative to the main body (21) of the corresponding auxiliary support member (16) between a first support position at which the main body bears said separation element (22) along radial directions, and a second release position at which said separation element (22) is free to move along said radial directions.

18. An apparatus as claimed in claim 17, wherein on moving between the first support position and the second release position, said separation element (22) is shiftable along an axial direction relative to the main body (21).

19. An apparatus as claimed in claim 17, wherein in the first support position, said separation element (22) is disposed around said second outer circumferential surface (16a) and in the second release position, said separation element (22) projects at least partly in overhanging beyond said second outer circumferential surface (16a).

20. An apparatus as claimed in claim 17, wherein each of the auxiliary support members (16) further comprises recovery devices (39, 40, 41) interposed between said separation element (22) and main body (21), to cause return of said separation element (22) to the first support position.

21. An apparatus as claimed in claim 17, wherein said separation element (22) is defined by a radially flexible laminar body.

22. An apparatus as claimed in claim 17, wherein said separation element (22) is defined by a membrane.

23. An apparatus as claimed in claim 22, wherein said membrane (22) has a distal edge (22a) integrally linked to a circular edge (28) of the main body (21) to be moved close to the building drum (10) and a proximal edge (22b), opposite to the distal edge (22a), movably linked to said main body (21).

24. An apparatus as claimed in claim 23, wherein each of the auxiliary support members (16) comprises guides (29) formed in the main body (21) and runners (30) integrally linked to the membrane (22) at the proximal edge (22b) and slidable within said guides (29), to enable movement of said membrane (22) between the first support position and the second release position.

25. An apparatus as claimed in claim 24, wherein each of the auxiliary support members (16) further comprises recovery devices (39, 40, 41) connected to the runners (30) and the main body (21), to return said membrane (22) to the first support position.

## Patentansprüche

1. Verfahren zur Herstellung von Reifen, das die folgenden Schritte umfasst:
- Bereitstellen einer Fertigungstrommel (10) mit einer ersten äußeren Umfangsfläche (14);
- Ineingriffbringen von Hilfstragelementen (16) mit der Fertigungstrommel (10), die jeweils in einer axial angenäherten Beziehung mit einem axialen Ende der Fertigungstrommel (10) stehen, wobei jedes Hilfstragelement (16) eine zweite äußere Umfangsfläche (16a) aufweist, die sich in Fortsetzung der ersten äußeren Umfangsfläche (14) erstreckt;
- Bereitstellen zumindest eines Trennelements (22) an einer radial äußeren Stellung an zumindest einem der Hilfstragelemente (16), wobei das Trennelement (22) eine umlaufende Tragfläche (23) aufweist;
- Aufbringen zumindest einer Reifenkomponente (4; 19; 20) um zumindest die zweite äußere Umfangsfläche (16a), wobei die Reifenkomponente zumindest zum Teil auf der umlaufenden Tragfläche (23) liegt;
- axiales Bewegen der Hilfstragelemente (16) von der Fertigungstrommel (10) weg, um die umlaufende Tragfläche (23) jedes Trennelements (22) radial zu kontrahieren, um es von der jeweiligen zumindest einen Komponente (4; 19,- 20) des Reifens (2) zu entkoppeln.

2. Verfahren nach Anspruch 1, wobei die radiale Kontraktion der umlaufenden Tragfläche (23) im Zusammenfallen einer Membran besteht, die in dem Trennelement (22) enthalten ist.

3. Verfahren nach Anspruch 1, wobei die radiale Kontraktion der umlaufenden Tragfläche (23) darin besteht, dass ein Laminarkörper gekrümmt wird, der in dem Trennelement (22) enthalten ist.

4. Verfahren nach Anspruch 1, wobei jedes Hilfstragelement (16) einen Hauptkörper (21) umfasst, wobei das Trennelement (22) relativ zu dem Hauptkörper (21) zwischen einer ersten Tragstellung, in der der Hauptkörper (21) das Trennelement (22) entlang von radialen Richtungen trägt, und einer zweiten Freigabestellung, in der das Trennelement (22) sich frei entlang der radialen Richtungen bewegen kann, beweglich ist.

5. Verfahren nach Anspruch 4, wobei der Schritt des radialen Kontrahierens der umlaufenden Tragfläche (23) ausgeführt wird, indem der Hauptkörper (21) relativ zu dem Trennelement (22) aus der ersten in die zweite Stellung versetzt wird.

6. Verfahren nach Anspruch 5, wobei zur Bewegung zwischen der ersten Tragstellung und der zweiten Freigabestellung der Hauptkörper (21) axial relativ zu dem Trennelement (22) verschoben wird.

7. Verfahren nach Anspruch 1, wobei die umlaufende Tragfläche (23) nach dem Schritt des radialen Kontrahierens der umlaufenden Tragfläche (23) axial auseinerbewegt wird.

8. Verfahren nach Anspruch 4, des Weiteren umfassend die folgenden Schritte:
- axiales Wegbewegen jedes Hauptkörpers (21) von der Fertigungstrommel (10) aus der ersten in die zweite Stellung, während die umlaufende Tragfläche (23) noch in Kontakt mit der zumindest einen Reifenkomponente (4; 19; 20) steht, bis die radiale Kontraktion der umlaufenden Tragfläche (23) und die Trennung der umlaufenden Tragfläche (23) von der jeweiligen Reifenkomponente (4; 19; 20) verursacht wird;
- axiales Wegbewegen des Hauptkörpers (21) und des Trennelements (22) von der Fertigungstrommel (10).

9. Verfahren nach einem der vorhergehenden Ansprüche, wobei die radiale Kontraktion der umlaufenden Tragfläche (23) verursacht wird, indem die zumindest eine Reifenkomponente (4; 19) um die umlaufende Tragfläche (23) gegürtet wird.

10. Verfahren nach Anspruch 4, wobei nach dem Schritt des radialen Kontrahierens das Trennelement (22) zurück in die erste Tragstellung relativ zu dem Hauptkörper (21) gebracht wird.

11. Verfahren nach Anspruch 4, wobei nach dem Schritt des radialen Kontrahierens das Trennelement (22) durch Federwirkung zurück in die erste Tragstellung gebracht wird.

12. Verfahren nach Anspruch 1, wobei der Schritt des Aufbringens der zumindest einen Komponente (4; 19; 20) des Reifens (2) um die zweite äußere Umfangsfläche (16a) den Schritt des Auflegens eines durchgehenden länglichen Elastomerelements in Wicklungen umfasst, die Seite an Seite oder in einer radial überlappenden Beziehung angeordnet sind.

13. Verfahren nach Anspruch 1, wobei der Schritt des Aufbringens der zumindest einen Komponente (4; 19; 20) des Reifens (2) um die zweite äußere Umfangsfläche (16a) den Schritt des Auflegens zumindest eines streifenförmigen Elements aus Elastomergewebe (20) zumindest zum Teil auf die umlaufende Tragfläche (23) umfasst.

14. Verfahren nach dem vorhergehenden Anspruch, wobei ein darauffolgender Schritt des Auflegens eines durchgehenden länglichen Elastomerelements auf dem zumindest einen streifenförmigen Element (20) in Form von Wicklungen vorgesehen wird, die Seite an Seite oder in einer radial überlappenden Beziehung angeordnet sind.

15. Verfahren nach einem oder mehreren der vorhergehenden Ansprüche, wobei zumindest eine Karkassenlage (3) durch Auflegen von Basiskomponenten auf die Fertigungstrommel (10) hergestellt wird.

16. Verfahren nach dem vorhergehenden Anspruch, wobei das Aufbringen der zumindest einen Karkassenlage (3) einen Schritt des Aufbringens einer Vielzahl von streifenförmigen Elementen umfasst, die aufeinanderfolgend entlang der Umfangserstreckung der ersten äußeren Umfangsfläche (14) angeordnet sind.

17. Vorrichtung zur Herstellung von Reifen, wobei die Vorrichtung umfasst:
- eine Fertigungstrommel (10) mit zumindest einer ersten äußeren Umfangsfläche (14);
- zumindest ein Paar von Hilfstragelementen (16), die jeweils einen Hauptkörper (21) umfassen, wobei die Hilfstragelemente (22) für den lösbaren Eingriff mit der Fertigungstrommel (10) geeignet sind, jeweils in axial angenäherter Beziehung mit einem jeweiligen Ende der Fertigungstrommel (10) stehen, und zweite äußere Umfangsflächen (16a) aufweisen, die sich in Fortsetzung der ersten äußeren Umfangsfläche (14) erstrecken, um zumindest eine Komponente (4; 19; 20) des Reifens (2) zu tragen;
- zumindest ein Trennelement (22), das an einer radial äußeren Stellung an zumindest einem der Hilfstragelemente (16) vorgesehen ist und eine umlaufende Tragfläche (23) trägt; wobei jedes Trennelement (22) relativ zu dem Hauptkörper (21) des entsprechenden Hilfstragelements (16) zwischen einer ersten Tragstellung, in der der Hauptkörper das Trennelement (22) entlang von radialen Richtungen trägt, und einer zweiten Freigabestellung, in der das Trennelement (22) sich frei entlang der radialen Richtungen bewegen kann, beweglich ist.

18. Vorrichtung nach Anspruch 17, wobei bei der Bewegung zwischen der ersten Tragstellung und der zweiten Freigabestellung das Trennelement (22) entlang einer axialen Richtung relativ zu dem Hauptkörper (21) verschiebbar ist.

19. Vorrichtung nach Anspruch 17, wobei in der ersten Tragstellung das Trennelement (22) um die zweite äußere Umfangsfläche (16a) herum angeordnet ist, und in der zweiten Freigabestellung das Trennelement (22) zumindest zum Teil im Überhang über die zweite äußere Umfangsfläche (16a) hinaus vorragt.

20. Vorrichtung nach Anspruch 17, wobei jedes der Hilfstragelemente (16) des Weiteren Rückstelleinrichtungen (39, 40, 41) umfasst, die zwischen dem Trennelement (22) und dem Hauptkörper (21) angeordnet sind, um die Rückkehr des Trennelements (22) in die erste Tragstellung zu veranlassen.

21. Vorrichtung nach Anspruch 17, wobei das Trennelement (22) durch einen radial flexiblen laminaren Körper definiert wird.

22. Vorrichtung nach Anspruch 17, wobei das Trennelement (22) durch eine Membran definiert wird.

23. Vorrichtung nach Anspruch 22, wobei die Membran (22) einen distalen Rand (22a) aufweist, der einteilig mit einem kreisförmigen Rand (28) des Hauptkörpers (21) verbunden ist, um nahe an die Fertigungstrommel (10) bewegt zu werden, sowie einen proximalen Rand (22b), der dem distalen Rand (22a) gegenüberliegt und beweglich mit dem Hauptkörper (21) verbunden ist.

24. Vorrichtung nach Anspruch 23, wobei jedes der Hilfstragelemente (16) Führungen (29) umfasst, die in dem Hauptkörper (21) ausgebildet sind, und Laufstücke (30), die an dem proximalen Rand (22b) einteilig mit der Membran (22) verbunden und innerhalb der Führungen (29) verschiebbar sind, um die Bewegung der Membran (22) zwischen der ersten Tragstellung und der zweiten Freigabestellung zu ermöglichen.

25. Vorrichtung nach Anspruch 24, wobei jedes der Hilfstragelemente (16) des Weiteren Rückstelleinrichtungen (39, 40, 41) umfasst, die mit den Laufelementen (30) und dem Hauptkörper (21) verbunden sind, um die Membran (22) in die erste Tragstellung zurückzuführen.

## Revendications

1. Procédé pour construire des pneus, comprenant les étapes qui consistent :
- à fournir un tambour de construction (10) ayant une première surface circonférentielle externe (14) ;
- à engager les éléments de support auxiliaires (16) avec le tambour de construction (10), chacun dans une relation de rapprochement axial avec une extrémité axiale du tambour de construction (10), chaque élément de support auxiliaire (16) ayant une deuxième surface circonférentielle externe (16a) s'étendant dans le prolongement de ladite première surface circonférentielle externe (14) ;
- à fournir au moins un élément de séparation (22) à une position radialement externe sur au moins l'un desdits éléments de support auxiliaires (16), ledit élément de séparation (22) ayant une surface de support circonférentielle (23) ;
- à appliquer au moins un composant de pneu (4 ; 19 ; 20) autour d'au moins ladite deuxième surface circonférentielle externe (16a), lequel composant de pneu se trouve au moins en partie sur ladite surface de support circonférentielle (23) ;
- à éloigner axialement lesdits éléments de support auxiliaires (16) dudit tambour de construction (10) afin de contracter radialement la surface de support circonférentielle (23) de chaque élément de séparation (22) pour la découpler dudit au moins un composant respectif (4 ; 19 ; 20) du pneu (2).

2. Procédé tel que revendiqué dans la revendication 1, dans lequel la contraction radiale de la surface de support circonférentielle (23) consiste en un affaissement d'une membrane incluse dans ledit élément de séparation (22).

3. Procédé tel que revendiqué dans la revendication 1, dans lequel la contraction radiale de la surface de support circonférentielle (23) consiste en une flexion d'un corps laminaire inclus dans ledit élément de séparation (22).

4. Procédé tel que revendiqué dans la revendication 1, dans lequel chaque élément de support auxiliaire (16) comprend un corps principal (21), ledit élément de séparation (22) étant mobile par rapport audit corps principal (21) entre une première position de support, à laquelle le corps principal (21) supporte ledit élément de séparation (22) le long de directions radiales, et une deuxième position de libération, à laquelle ledit élément de séparation (22) est libre de se déplacer le long desdites directions radiales.

5. Procédé tel que revendiqué dans la revendication 4, dans lequel l'étape qui consiste à contracter radialement le surface de support circonférentielle (23) est réalisée en décalant le corps principal (21) par rapport à l'élément de séparation (22) de la première à la deuxième position.

6. Procédé tel que revendiqué dans la revendication 5, dans lequel, pour le mouvement entre la première position de support et la deuxième position de libération, le corps principal (21) est décalé axialement par rapport audit élément de séparation (22).

7. Procédé tel que revendiqué dans la revendication 1, dans lequel la surface de support circonférentielle (23) est écartée axialement après l'étape qui consiste à contracter radialement ladite surface de support circonférentielle (23).

8. Procédé tel que revendiqué dans la revendication 4, comprenant en outre les étapes qui consistent :
- à éloigner axialement chaque corps principal (21) du tambour de construction (10) de la première à la deuxième position, tandis que ladite surface de support circonférentielle (23) est toujours en contact avec ledit au moins un composant de pneu (4 ; 19 ; 20) jusqu'à ce que l'on provoque la contraction radiale de ladite surface de support circonférentielle (23) et la séparation de ladite surface de support circonférentielle (23) du composant de pneu respectif (4 ; 19 ; 20) ;
- à éloigner axialement le corps principal (21) et l'élément de séparation (22) du tambour de construction (10).

9. Procédé tel que revendiqué dans l'une quelconque des revendications précédentes, dans lequel la contraction radiale de la surface de support circonférentielle (23) est provoquée par un effet de courroie sur ledit au moins un composant de pneu (4 ; 19) sur ladite surface de support circonférentielle (23).

10. Procédé tel que revendiqué dans la revendication 4, dans lequel, après l'étape de contraction radiale, ledit élément de séparation (22) est ramené à la première position de support par rapport audit corps principal (21).

11. Procédé tel que revendiqué dans la revendication 4, dans lequel, après l'étape de contraction radiale, ledit élément de séparation (22) est ramené par un ressort à la première position de support.

12. Procédé tel que revendiqué dans la revendication 1, dans lequel l'étape d'application dudit au moins un composant (4 ; 19 ; 20) du pneu (2) autour de ladite deuxième surface circonférentielle externe (16a) comprend l'étape qui consiste à poser un élément élastomère allongé continu en bobines disposées côte à côte ou dans une relation de superposition radiale.

13. Procédé tel que revendiqué dans la revendication 1, dans lequel l'étape d'application d'au moins un composant (4 ; 19 ; 20) du pneu (2) autour de ladite deuxième surface circonférentielle externe (16a) comprend l'étape qui consiste à poser au moins un élément de type bande de tissu élastomère (20) au moins en partie sur ladite surface de support circonférentielle (23).

14. Procédé tel que revendiqué dans la revendication précédente, dans lequel il est prévu une étape ultérieure de pose d'un élément élastomère allongé continu sur ledit au moins un élément de type bande (20) sous la forme de bobines disposées côte à côte ou dans une relation de superposition radiale.

15. Procédé tel que revendiqué dans une ou plusieurs des revendications précédentes, dans lequel au moins un pli de carcasse (3) est réalisée par la pose de composants élémentaires sur ledit tambour de construction (10).

16. Procédé tel que revendiqué dans la revendication précédente, dans lequel l'application dudit au moins un pli de carcasse (3) comprend une étape qui consiste à appliquer une pluralité d'éléments de type bande disposés en succession le long de l'extension circonférentielle de ladite première surface circonférentielle externe (14).

17. Appareil pour construire des pneus, comprenant :
- un tambour de construction (10) ayant au moins une première surface circonférentielle externe (14) ;
- au moins une paire d'éléments de support auxiliaires (16) comprenant chacun un corps principal (21), lesdits éléments de support auxiliaires (16) étant susceptible d'engagement amovible avec le tambour de construction (10), chacun étant dans une relation de rapprochement axial avec une extrémité respective du tambour de construction (10), et ayant des deuxièmes surfaces circonférentielles externes (16a) s'étendant dans le prolongement de ladite première surface circonférentielle externe (14) pour maintenir au moins un composant (4 ; 19 ; 20) du pneu (2) ;
- au moins un élément de séparation (22) prévu à une position radialement externe sur au moins l'un desdits éléments de support auxiliaires (16), portant une surface de support circonférentielle (23) ; chaque élément de séparation (22) étant mobile par rapport au corps principal (21) de l'élément de support auxiliaire correspondant (16) entre une première position de support à laquelle le corps principal maintient ledit élément de séparation (22) le long de directions radiales, et une deuxième position de libération à laquelle ledit élément de séparation (22) est libre de se déplacer le long desdites directions radiales.

18. Appareil tel que revendiqué dans la revendication 17, dans lequel lors du déplacement entre la première position de support et la deuxième position de libération, ledit élément de séparation (22) peut être décalé le long d'une direction axiale par rapport au corps principal (21).

19. Appareil tel que revendiqué dans la revendication 17, dans lequel dans la première position de support, ledit élément de séparation (22) est disposé autour de ladite deuxième surface circonférentielle externe (16a) et dans la deuxième position de libération, ledit élément de séparation (22) fait saillie au moins en partie en surplomb au-delà de ladite deuxième surface circonférentielle externe (16a).

20. Appareil tel que revendiqué dans la revendication 17, dans lequel chacun des éléments de support auxiliaires (16) comprend en outre des dispositifs de récupération (39, 40, 41) interposés entre ledit élément de séparation (22) et le corps principal (21), pour provoquer le retour dudit élément de séparation (22) à la première position de support.

21. Appareil tel que revendiqué dans la revendication 17, dans lequel ledit élément de séparation (22) est défini par un corps laminaire radialement flexible.

22. Appareil tel que revendiqué dans la revendication 17, dans lequel ledit élément de séparation (22) est défini par une membrane.

23. Appareil tel que revendiqué dans la revendication 22, dans lequel ladite membrane (22) a un bord distal (22a) intégralement liée à un bord circulaire (28) du corps principal (21) de manière à être déplacé à proximité du tambour de construction (10) et un bord proximal (22b), opposé au bord distal (22a), lié de manière mobile audit corps principal (21).

24. Appareil tel que revendiqué dans la revendication 23, dans lequel chacun des éléments de support auxiliaires (16) comprend des éléments de guidage (29) formés dans le corps principal (21) et des glissières (30) intégralement liées à la membrane (22) au niveau du bord proximal (22b) et pouvant coulisser à l'intérieur desdits éléments de guidage (29), pour permettre un mouvement de ladite membrane (22) entre la première position de support et la deuxième position de libération.

25. Appareil tel que revendiqué dans la revendication 24, dans lequel chacun des éléments de support auxiliaires (16) comprend en outre des dispositifs de récupération (39, 40, 41) reliés aux glissières (30) et au corps principal (21), pour ramener ladite membrane (22) à la première position de support.
